# EUROPÄISCHE PATENTSCHRIFT

(11) **EP 1 181 347 B1**
(45) Veröffentlichungstag und Bekanntmachung des Hinweises auf die Patenterteilung: **08.09.2004**
(21) Anmeldenummer: 00940357.7
(22) Anmeldetag: 09.06.2000
(51) Int. Cl.: C12C 7/14, C12C 7/16

(54) **VERFAHREN ZUR STEUERUNG DES WÜRZEABFLUSSES AUS EINEM LÄUTERBOTTICH**
METHOD FOR CONTROLLING THE FLOW OF BREWER'S WORT FROM A CLARIFYING TANK
PROCEDE DE COMMANDE DE l'ECOULEMENT DU MOUT DE BRASSERIE A PARTIR D'UNE CUVE DE CLARIFICATION

(30) Priorität: 09.06.1999 DE 19926288
(43) Veröffentlichungstag der Anmeldung: 27.02.2002
(73) Patentinhaber: Syskron GmbH, 93068 Neutraubling (DE)
(72) Erfinder: HEGE, Ulrich, D-85356 Freising (DE); VAN DE BRAAK, Benno, D-85354 Freising (DE)
(74) Vertreter: Grünecker, Kinkeldey, Stockmair & Schwanhäusser Anwaltssozietät
(86) Internationale Anmeldenummer: PCT/EP2000/005362
(87) Internationale Veröffentlichungsnummer: WO 2000/077263

(56) Entgegenhaltungen:
- WO-A-00/20094
- DE-A- 4 324 157
- BACK W ET AL: "New control system for the clarifying process in the lauter tun." BRAUWELT 139 (37/38) 1666-1668 1999 TECH. UNIV. MUENCHEN, WEIHENSTEPHAN, GERMANY, XP000971630
- DENK V ET AL: "Entwicklung eines Verfahrens zur Regelung und Optimierung der Gärung und Reifung von Bier." BRAUWELT 1995 LEHRSTUHL FÜR FLUIDMECHANIK UND PROZESSAUTOMATION, TECH. UNIV. MÜNCHEN-WEIHENSTEPHAN, FREISING, GERMANY, Bd. 135, Nr. 36, Seiten 1788-1790, 1803 - 1807, XP000971637
- SIMUTIS R ET AL: "Fuzzy-aided neural network for real-time state estimation and process prediction in the alcohol formation step of production-scale beer brewing." JOURNAL OF BIOTECHNOLOGY 1993 CORRESPONDENCE (REPRINT) ADDRESS, A. LÜBBERT, INST. FÜR TECH. CHEM., UNIV. HANNOVER, W-3000 HANOVER, GERMANY, Bd. 27, Nr. 2, Seiten 203-215, XP000971272

## Beschreibung

Die Erfindung bezieht sich auf ein Verfahren der im Oberbegriff des Patentanspruchs 1 genannten Art.

Ein solches Verfahren zur Regelung des Würzeabflusses bei der Biererzeugung ist z.B. aus der deutschen Offenlegungsschrift DE 43 24 157 A1 bekannt. Bei diesem Verfahren wird der Istwürzefluss gemessen und mit einem vorgegebenen Sollwürzefluss verglichen. In Abhängigkeit von der Differenz zwischen dem Istwürzefluss und dem Sollwürzefluss wird die Öffnung einer Regelklappe und die Höhe einer Aufhackmaschine gesteuert. Eine weitere Öffnung des Regelventils führt in der Regel zu einem größeren Istwürzefluss. Durch ein Absenken der Aufhackvorrichtung wird eine auf dem Senkboden des Läuterbottichs abgesetzte Treberschicht aufgelockert, was ebenfalls zu einer Erhöhung des Istwürzeflusses führt. Um eine möglichst kurze Läuterzeit zu erreichen, wird im Verlauf, einer Trendingphase der Sollwürzefluss stufenweise mit konstanter Steigung erhöht. Falls im Verlauf der Trendingphase die gewünschte Würzeflusssteigerung weder durch ein weiteres Öffnen der Regelklappe noch durch ein Absenken der Aufhackmaschine erreicht werden kann, weil beispielsweise die Regelklappe vollständig geöffnet ist und ein weiteres Absenken der Aufhackmaschine unerwünscht ist, wird der Sollwürzefluss abgesenkt. Nachdem der Istwürzefluss für eine vorbestimmte Zeit konstant geblieben oder gar angestiegen ist, wird der Sollwürzefluss wieder treppenförmig mit der ursprünglichen Steigung erhöht.

Darüber hinaus ist dem Stand der Technik die Fuzzy-Logik bekannt. Aufbauend auf der Theorie unscharfer Mengen (Fuzzy-Sets), die 1965 von Zadeh begründet wurde, werden die vagen, subjektiven und mehrdeutigen Begriffe menschlichen Denkens algorithmisch nachvollziehbar. Im Gegensatz zur klassischen Mengenlehre, bei der jedes Element zu einer bestimmten Menge entweder gehört oder nicht gehört, können die einzelnen Elemente der unscharfen Menge dieser auch zu einem bestimmten Zugehörigkeitsgrad, der üblicherweise im Intervall zwischen 0 und 1 liegt, angehören.

Dabei bedeutet der Grad 1 die volle Zugehörigkeit und der Grad 0 keine Zugehörigkeit zu der betrachteten Menge. Zwischen diesen Werten findet ein kontinuierlicher Übergang von "Element-sein" zu "Nicht-Element-sein" statt.

Wesentliche Elemente der Fuzzy-Logik sind die sog. linguistischen Variablen. Ihre Werte sind nicht Zahlen, sondern Ausdrücke der Umgangssprache. Da Wörter nicht so präzise wie Zahlen sind, werden die einzelnen Werte durch unscharfe Mengen repräsentiert.

Beim Einsatz der Fuzzy-Logik in einer Regelung werden alle Eingangsgrößen zunächst fuzzifiziert. Dabei bildet jede Eingangsgröße eine linguistische Variable, auf deren Meßbereich sog. Fuzzy-Sets (unscharfe Mengen) definiert sind. Bei der Fuzzifizierung wird der Zugehörigkeitsgrad zu den Fuzzy-Sets bestimmt. Mittels einer Wissensbasis wird aufgrund der fuzzifizierten Eingangsgrößen ein Zugehörigkeitsgrad auf einem Set jeder Ausgangsgröße bestimmt. Die Wissensbasis wird in Form von Wenn-Dann-Regeln abgelegt. Die Zugehörigkeitsgrade zu den Ausgangsgrößen werden zu einer Ausgangsmenge akkumuliert. Die unscharfe Ausgangsmenge wird über den Schwerpunkt und dessen Schnittpunkt mit der Achse der Ausgangsgröße defuzzifiziert und ergibt so einen scharfen Wert für jede Ausgangsgröße.

Wenngleich mit dem in der Offenlegungsschrift DE 43 42 157 Al beschriebenen Verfahren zwar eine Verkürzung der Läuterzeit erreicht werden kann, so bleibt dennoch auch bei diesem Verfahren der Läutervorgang derjenige Vorgang bei der Würzeherstellung, der die längste Zeit erfordert und deshalb im Hinblick auf eine weitere Erhöhung der Sudfolge verkürzt werden sollte. Dies sollte ohne Beeinträchtigung der Würzequalität erfolgen. Femer ist es wünschenswert, dass ein Regler und ein Verfahren zur Steuerung des Würzabflusses aus einem Läuterbottich möglichst nicht an verschiedene Biertypen, Rohstoffzusammensetzungen, Schrotzusammensetzungen, Maischekonsistenz und Beladungen der Läuterbottiche angepasst werden müssen. Vielmehr soll sich der Regler und das Verfahren durch Berücksichtigung wichtiger Parameter selbst an die verschiedensten Biertypen, Rohstoffzusammensetzungen usw. anpassen.

Aus Denk et al. "Entwicklung eines Verfahrens zur Regelung und Optimierung der Gärung und Reifung von Bier", Brauwelt Nr. 36, S. 1788, (1995), ist die Regelung der Gärung und Reifung mit Hilfe der Fuzzy-Logik bekannt.

Aus der WO 00/20094 (Stand der Technik gemäß Artikel 54(3) EPÜ) ist die Kontrolle der Zufuhr von Filterhilfsmittel zu einem Filter bekannt.

Es ist daher die Aufgabe der Erfindung, einen Regel und ein Verfahren anzugeben, bei denen die Abläuterung aus einem Läuterbottich unter Berücksichtigung von Erfahrungen von Fachleuten beschleunigt wird.

Diese Aufgabe wird durch den Patentanspruch 1 gelöst.

Bevorzugte Ausführungsformen sind Gegenstand der Unteransprüche.

Vorteilhaft an der Berücksichtigung der zeitlichen Änderung der Stellung des Regelventils ist, dass die Aufhackmaschine schneller reagiert und damit die Hubspiele der Aufhackmaschine erheblich reduziert werden. Dadurch wird insbesondere ein sehr tiefes Absenken der Aufhackmaschine vermieden, was zu einer stärkeren Trübung der Würze führen würde.

Die Berücksichtigung der Trübung der abfließenden Würze vorzugsweise in Verbindung mit der Berücksichtigung der zeitlichen Änderung der Regelklappe bietet den Vorteil, dass die Aufhackmaschine in immer wieder verschiedenen Höhen fährt und insbesondere die Zick-Zack-Messer nicht immer in den Spuren laufen.

Vorteilhaft an einem geringeren Wasserpuffer auf der Treberschicht ist ferner, dass sich ein größeres Konzentrationsgefälle einstellt, was zu einer verbesserten Ausbeute führt.

Ein Absenken eines Niveaus in einem Läutergefäß führt zu einer Erhöhung des Differenzdruckes an der Treberschicht und damit in vorteilhafter Weise zu einer Erhöhung des Istwürzeflusses. Durch ein allmähliches Absenken des Niveaus in dem Läutergefäß wird ein plötzlicher Sog auf das Treberbett vermieden.

Vorteilhaft an einer Reduzierung der Anschwänzwassermenge bei gutlaufenden Suden ist, dass sie eine spätere Abtropfzeit reduziert wird.

Eine Verkürzung des Abläutervorgangs kann bei schlechtlaufenden Suden dadurch erreicht werden, dass die Vorderwürze oder ein Nachguss vorzeitig abgebrochen wird, insbesondere dann, wenn eine Aufhacksperre schon aktiv ist.

Ein zwangsweises Absenken der Aufhackmaschine in eine tiefe Stellung, falls die Aufhackmaschine wahrend der Vorderwürze eine bestimmte Höhe nicht unterschritten hat, führt vorteilhafterweise zu einer besseren Auswaschung des Extrakts.

Durch die Berücksichtigung der zeitlichen Änderung der Regelklappenstellung sowie der aktuellen Stellung der Aufhackmaschine wird in vorteilhafter Weise ein zu frühes Hochziehen des Istwurzeflusses vermieden. Dies würde zu einem Absenken der Aufhackmaschine und damit zu einer erhohten Trübung der Würze führen, die von einem Trübungssensor erst nach einer gewissen zeitlichen Verzögerung bemerkt werden würde.

Vorteilhaft an der Erfindung ist ferner, dass die Ablauterzeit automatisch entsprechend den individuellen Besonderheiten eines Suds optimiert wird.

Im folgenden werden bevorzugte Ausführungsformen der Erfindung unter Bezugnahme auf die beiliegenden Zeichnungen näher erlautert. Dabei zeigen:
Fig. 1 eine schematische Darstellung eines Lauterbottichs mit einem erfindungsgemäßen Regler,
Fig. 2 einen Abläutervorgang eines gutlaufenden Suds,
Fig. 3 einen Abläutervorgang mit zum Schluss etwas zäh laufender Vorderwürze und schlechtlaufendem Nachguss.
Fig. 4 einen Abläutervorgang mit schlecht anlaufendem Nachguss, wobei der Nachguss zum Ende hin so gut läuft, dass weniger Anschwänzwasser ausreicht,
Fig. 5 einen Abläutervorgang, bei dem das Niveau in einem Läutergefäß erst vollständig angehoben wird, nachdem sich der Istwürzefluss während des Nachgusses erholt hat,
Fig. 6 einen Abläutervorgang, bei dem das Niveau in dem Läutergefäß etwas abgesenkt wird, während die Vorderwürze etwas zäh läuft,
Fig. 7 einen Abläutervorgang mit zum Schluss schlecht laufender Vorderwürze und zum Schluss schlecht laufendem Nachguss, wobei während des Nachgusses nochmals angeschwänzt wurde,
Fig. 8 einen Abläutervorgang, bei dem die Aufhackmaschine aufgrund der geringen Trübung tiefer fährt, und
Fig. 9 einen Abläutervorgang, bei dem die Aufhackmaschine aufgrund der hohen Trübung nicht so tief wie in Fig. 8 fährt.

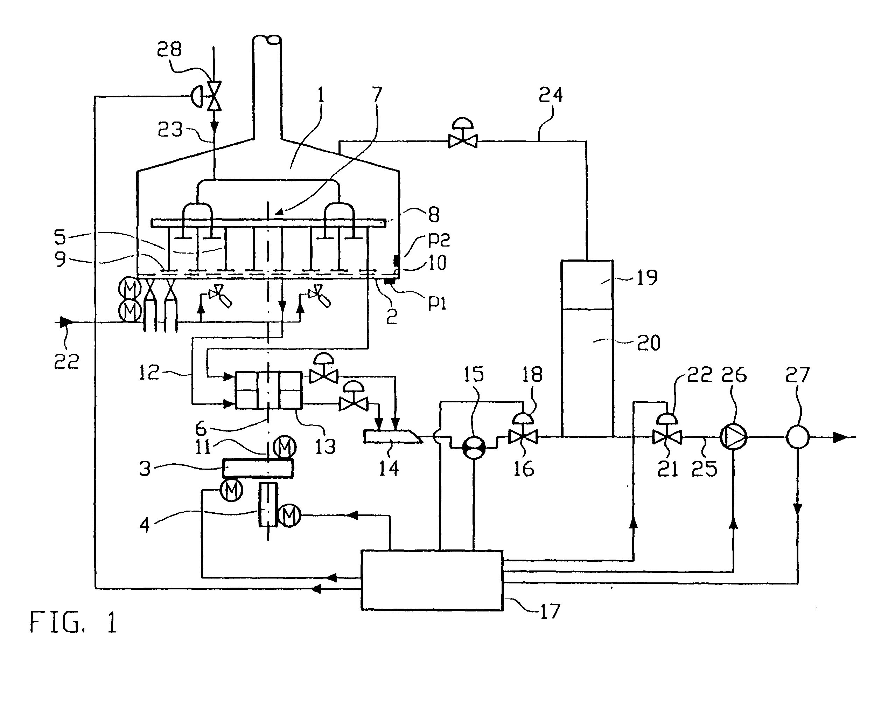

Fig. 1 zeigt eine Vorrichtung, in der der erfindungsgemäße Regler und das erfindungsgemäße Verfahren vorzugsweise eingesetzt werden. Die Vorrichtung umfasst einen Läuterbottich 1, der auf einer nicht dargestellten Tragvorrichtung angeordnet sein kann, um unter dem Boden 2 des Läuterbottichs 1 einen Einbauplatz für eine Antriebsvorrichtung 3 sowie für eine Hub- und Senkvorrichtung 4 für die innerhalb des Läuterbottichs 1 angeordnete Aufhackmaschine 5 zu schaffen. Die Antriebsmotoren für die Hub- und Senkvorrichtung sowie für die Drehbewegung der Aufhackmaschine sind mit M gekennzeichnet. Die Aufhackmaschine 5 weist eine Antriebswelle 6 auf, welche drehbeweglich sowie axial verschiebbar gelagert: ist. Im oberen Endabschnitt 7 der Antriebswelle 6 sind in Umfangsrichtung in gleichem Abstand von einander mehrere Horizontalarme 8 befestigt, die jeweils eine Reihe von Aufhackmessem 9 für eine Treberschicht tragen, welche sich beim Läutervorgang als Rückstand auf dem Senkbogen 10 des Läuterbottichs 1 absetzt. Die Antriebswelle 6 der Aufhackvorrichtung steht mit ihrem unteren Endabschnitt 11 in Eingriff mit der Antriebseinrichtung 3 sowie der Hub- und Senkvorrichtung 4.

Die aus dem Läuterbottich 1 abgezogene Läuterwürze gelangt über einen Abfluss 12 in den Sammeltopf 13 und von diesem in ein Zentralrohr 14, dem ein Durchflußmengenmeßgerät 15 und ein Regelventil 16 nachgeschaltet sind. Das Regelventil 16 ist vorzugsweise als Regelklappe ausgebildet und wird von Stellglied 18 gesteuert. Mit dem Durchflußmengenmeßgerät 15 wird der Istwürzefluss der Läuterwürze gemessen.

Das Durchflußmeßgerät 15 und der Trübungssensor 27 sind an den Regler 17 angeschlossen, der seinerseits mit dem Stellglied 18, der Regelklappe 16 sowie mit der Antriebsvorrichtung 3 der Hub- und Senkvorrichtung der Aufhackvorrichtung 5 verbunden ist. In einer weiteren bevorzugten Ausführungsform steuert der Regler 17 ferner die Läuterpumpe 26 und das Stellglied 22 der Drosselklappe 21. In einer weiteren bevorzugten Ausführungsform steuert der Regler 17 über Ventil 28 den Zufluss von Anschwänzwasser über Zuleitung 23. Der Zufluss des Anschwänzwassers kann aus der Stellung von Ventil 28 bestimmt werden. In einer weiteren bevorzugten Ausführungsform wird im Zufluss 23 ein weiterer Durchflussmesser zur genaueren Bestimmung der Anschwänzwassermenge und des -flusses installiert.

Mit Hilfe der Drucksensoren p₁ und p₂ wird ein Druckabfall an der Treberschicht gemessen. Dieser Druckabfall wird als Treberwiderstand bezeichnet. Der Treberwiderstand bietet für den Abläutervorgang einen ähnlichen Informationswert wie eine Istwürzeflussmessung durch das Durchflußmengenmeßgerät 15. Aus Kostengründen und wegen der Beschädigungsanfälligkeit der beiden als Drucksensoren dienenden Druckmessdosen kann bei der bevorzugten Ausführungsform der mittels der Drucksensoren p₁ und p₂ gemessene Treberwiderstand entweder mitberücksichtigt werden oder auf seine Messung verzichtet werden. Gut laufende Sude weisen einen geringen, schlecht laufende Sude dagegen einen hohen Treberwiderstand auf.

Nach dem Regelventil 16 fließt die Läuterwürze 25 durch ein Läutergefäß 19, ein Drosselventil 21, eine Läuterpumpe 26 und einen Trübungssensor 27. Das Drosselventil 21 ist vorzugsweise als Drosselklappe ausgeführt. Der Regler 17 steuert die Läuterpumpe 26 und über ein Stellglied 22 das Drosselventil 21, um den Läuterwürzeabfluss aus dem Läutergefäß 19 zu steuern. Falls dieser Abfluss allein durch die Läuterpumpe ausreichend genau gesteuert werden kann, beispielsweise durch wiederholtes Ein- und Ausschalten der Läuterpumpe oder durch die Steuerung der Läuterpumpendrehzahl, kann auf das Drosselventil 21 und Stellglied 22 in einer anderen bevorzugten Ausführungsform verzichtet werden. Das Läutergefäß 19 ist ferner über eine Ausgleichsleitung 24 mit dem Läuterbottich 1 zum Druckausgleich verbunden. Durch die Steuerung des Würzeabflusses aus dem Läutergefäß 19 kann unabhängig vom Zufluss das Niveau der Würze 20 im Läutergefäß 19 gesteuert werden. Der Niveauunterschied zwischen dem Wasserstand im Läuterbottich 1 und dem Niveau der Läuterwürze im Läutergefäß 19 erzeugt einen Druckunterschied, der das Wasser im Läuterbottich durch die am Grund des Läuterbottichs abgesetzte Treberschicht hindurch drückt. Folglich kann durch eine Veränderung des Niveaus der Läuterwürze 20 im Läutergefäß 19 dieser Differenzdruck und damit der Istwürzefluss aus dem Läuterbottich 1 gesteuert werden.

Leitung 22 verbindet den Läuterbottich 1 mit einem Maischbottich.

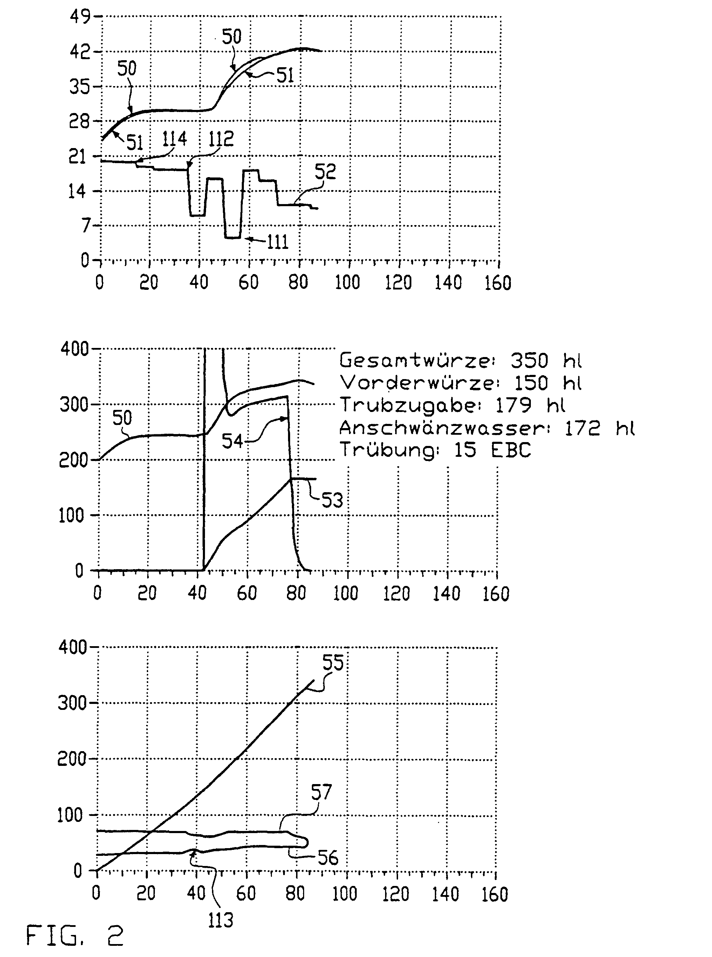

Mit der in Fig. 1 dargestellten Vorrichtung kann das erfindungsgemäße Verfahren durchgeführt werden. Fig. 2 bis 9 zeigen Abläutervorgänge von acht verschiedenen Suden, wobei zunächst die Vorderwürze abgeläutert wird und anschließend ein Nachguss erfolgt. Die Gesamtwürzmenge erfolgt beträgt jeweils 350 hl. Allgemein werden für die Berechnung der Mengen von Gesamtwürze, Vorderwürze, Nachguss und Anschwänzwasser aus den Prozessdaten die folgenden Gleichungen verwendet:
Gesamtwürze (hl) = S*AF(Pfv*(Pfv*0,004l/ 0,998))
Menge VM (hl) =: HG / S* 0,64 (hI/dT) / SW - TF*S
Menge Nachguss (hl) Gesamtwürze (hl) - Menge VW (hl)
Menge Anschwänzwasser (hl): Gesamtwürze (hl) - HG / S*AF
-S: Schüttung (dT) aus Prozessdaten
-AF: Ausbeutefaktor (% 100) ca. 0,76
-Pfv: Vorgabe für Pfannevollkonzentration (GG%)
-HG: Hauptguss (hl) aus Prozessdaten
-SW: Spülwasser (hl) aus Prozessdaten
-TF: spezifischer Faktor für Trebervolumen (hl/dT) ca. 1,80
-AF: Anschwänzwasserfaktor (hI/dT) ca. 0,5

Auf den X-Achsen aller Diagramme in Figuren 2 bis 9 ist die Zeit in Minuten seit dem Beginn des Abläutervorgangs aufgetragen. Das jeweils obere Diagramm zeigt den Istwürzefluss 50, den Sollwürzefluss 51 und die Höhe der Aufhackmaschine 52 über den Zeit. In den mittleren Diagrammen ist der Istwürzefluss 50, die Anschwänzwassermenge 53 und der Fluss von Anschwänzwasser 54 in beliebigen Einheiten aufgetragen. In den unteren Diagrammen ist die abgeläuterte Würze 55 in Hektolitern (hl), die Öffnung des Regelventils 56 in Prozent und das Niveau 57 in Läutergefäß 19 in beliebigen Einheiten über der Zeit aufgetragen. Femer ist angegeben, nach wie vielen hl abgeläuterter Würze die Trubzugabe erfolgt.

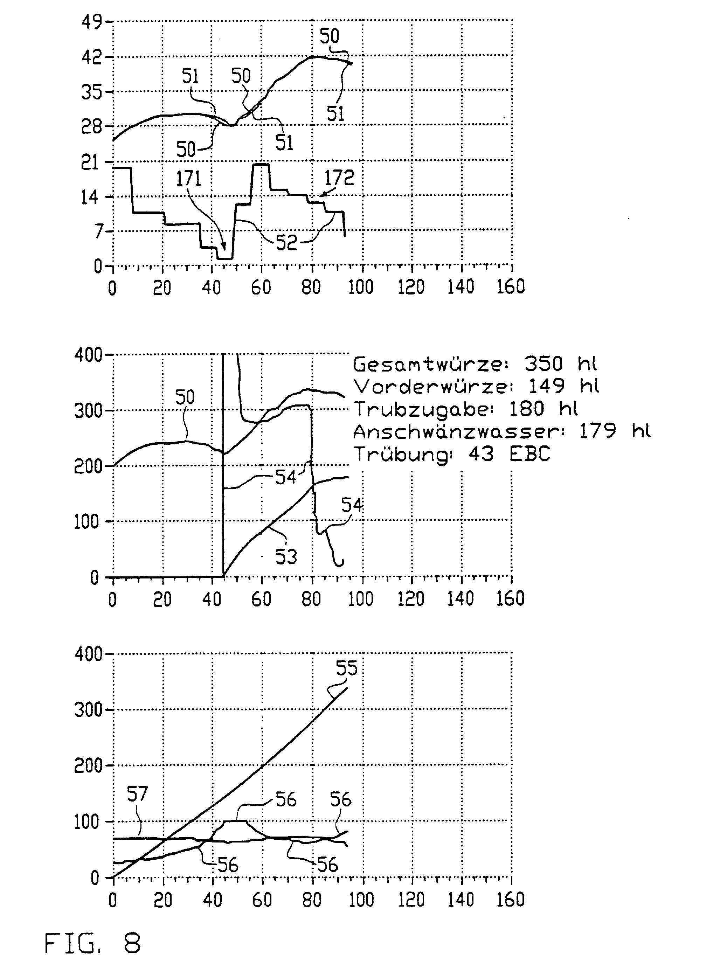

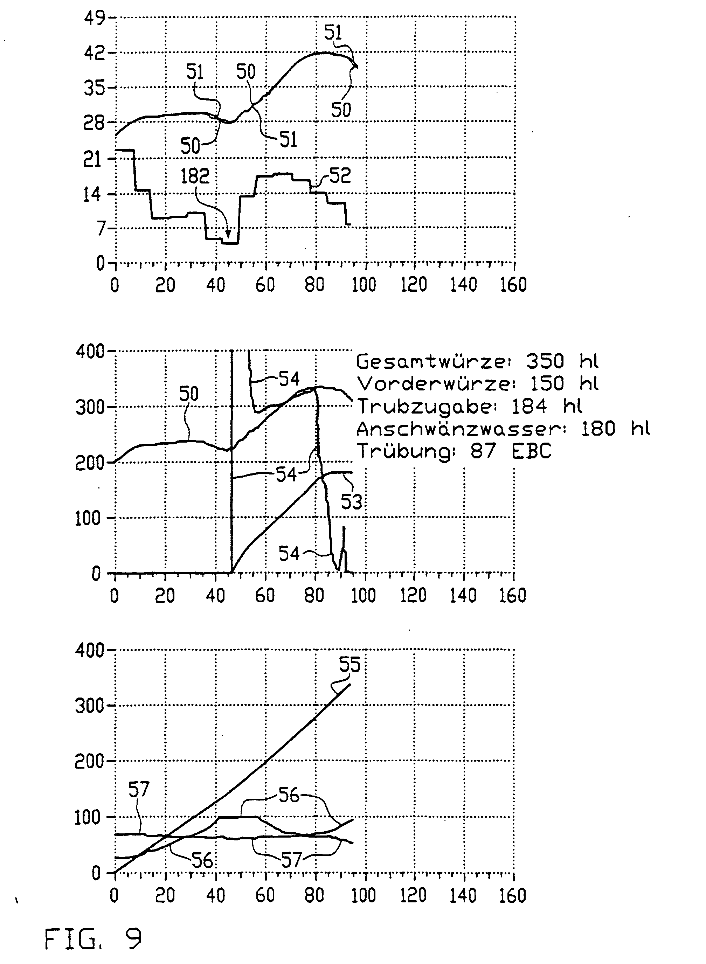

Gemäß einer bevorzugten Ausführungsform der Erfindung wird die Höhe der Aufhackmaschine von der durch Trübungssensor 27 gemessenen Trübung beeinflusst. Je tiefer die Aufhackmaschine in die Treberschicht einschneidet, desto schlechter ist die Filterwirkung der Treberschicht und desto trüber ist die abgeläuterte Würze. Das erfindungsgemäße Verfahren und eine bevorzugte Ausführungsform des erfindungsgemäßen Reglers steuern deshalb die Höhe der Aufhackmaschine in Abhängigkeit der Trübung der abfließenden Würze, so dass eine Erhöhung der Trübung zu einem weniger starken Absenken der Aufhackmaschine führt. Ein weniger tiefes Aufhacken des Treberbetts führt letztendlich auch zu einem Absenken des Istwürzeflusses. Da ein reduzierter Istwürzefluss bei gleichem Sollwürzefluss zu einem Absenken der Aufhackmaschine führen würde, wird außerdem der Sollwürzefluss reduziert. In den Figuren 8 und 9 bricht der Istwürzefluss bei den Stellen 171 und 182 rapide zusammen. In Fig. 8 beträgt die Trübung 43 EBC, wogegen sie in Fig. 9 87 EBC beträgt. Folglich fährt in Fig. 8 die Aufhackmaschine bei 171 tiefer als bei 182.

Durch Verwendung der Fuzzy-Logik beim erfindungsgemäßen Verfahren können in entgegengesetzten Richtungen wirkende Eingangsgrößen, die beispielsweise eine Ausgangsgröße sowohl erhöhen als auch absenken, in einfacher Weise gegeneinander abgewogen werden.

In einer weiteren bevorzugten Ausführungsform wird ferner die zeitliche Änderung der Regelventilstellung ausgewertet. Auf diese Weise kann die Aufhackmaschine schneller auf zeitliche Veränderungen reagieren, was Hubspiele erheblich reduziert. Besonders vorteilhaft an kleineren Hubspielen ist, dass dadurch vor allem ein sehr tiefes Absenken der Aufhackmaschine verhindert wird, was zu einer erhöhten Trübung der abgeläuterten Würze führen würde. Die Figuren 2, 3, 4 und 6 verdeutlichen insbesondere an Positionen 112, 113, 122, 123, 131, 132, 153 und 154, dass Sollwürzefluss und Istwürzefluss gut übereinstimmen und leicht ansteigen. Dabei wird die Aufhackmaschine plötzlich abgesenkt, weil das Stellglied 18 das Regelventil 16 schnell öffnet.

Figuren 2 und 8 zeigen insbesondere an Stellen 114 und 172, dass die Aufhackmaschine immer wieder in verschiedenen Höhen fährt und speziell die Zick-Zack-Messer nicht in den gleichen Spuren laufen, was durch die Berücksichtigung sowohl der Trübung als auch der zeitlichen Änderung der Regelventilstellung erreicht wird. Auf diese Weise wird das Treberbett gleichmäßiger aufgehackt und folglich auch gleichmäßiger ausgewaschen.

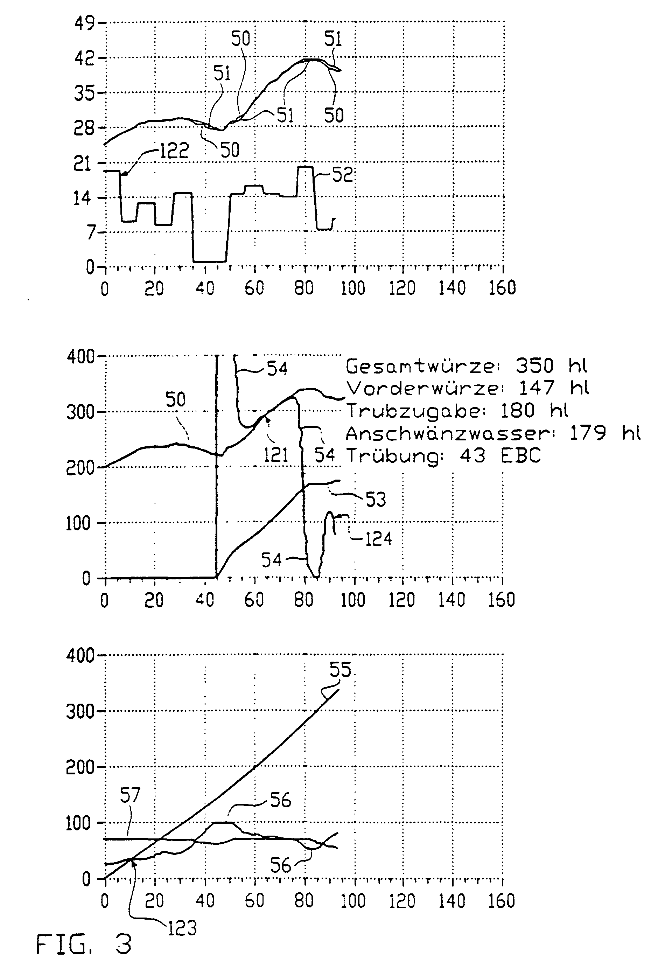

Bei geringem Treberwiderstand, also bei gutlaufenden Suden, wird vorzugsweise der Wasserpuffer auf der Treberschicht reduziert. Durch den geringeren Wasserpuffer stellt sich ein größeres Konzentrationsgefälle beim Umwandeln des Wassers in Würze beim Durchfließen der Treberschicht ein. Ein größeres Konzentrationsgefälle führt zu einer besseren Auswaschung der Treberschicht. Fig. 3, 4, 5 und 6 zeigen an den Stellen 121, 133, 141 und 152, dass, sobald der Istwürzefluss den Sollwürzefluss erreicht oder gar überschritten hat, der Anschwänzwasserfluss unter den Istwürzefluss abgesenkt wird, was als negativer Offset des Anschwänzwassers bezeichnet wird. Dies führt zu einer Reduzierung des Wasserpuffers auf der Treberschicht.

Solange auf der anderen Seite der Nachguss schlecht läuft, wird der Fluss des Anschwänzwassers größer gewählt als der Istwürzefluss, was zu einer Vergrößerung des Wasserpuffers auf der Treberschicht und damit über eine erhöhte Druckdifferenz zu einer Erhöhung des Istwürzeflusses beiträgt. Durch den größeren Wasserpuffer wird der obere Teil der Treberschicht aufgeweicht und so der Treberwiderstand weiter verringert.

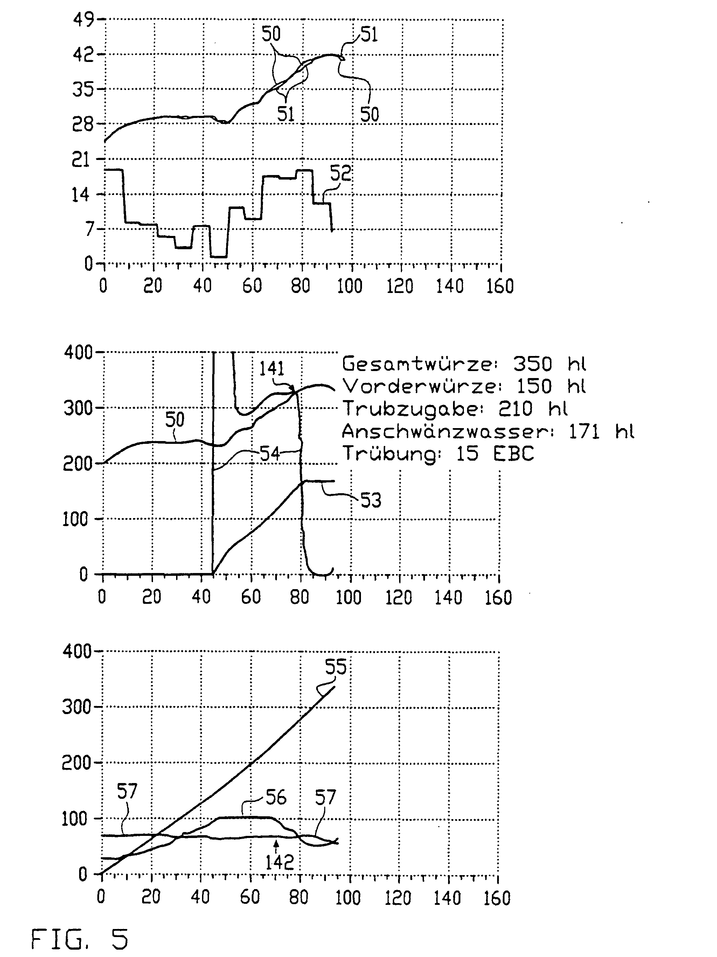

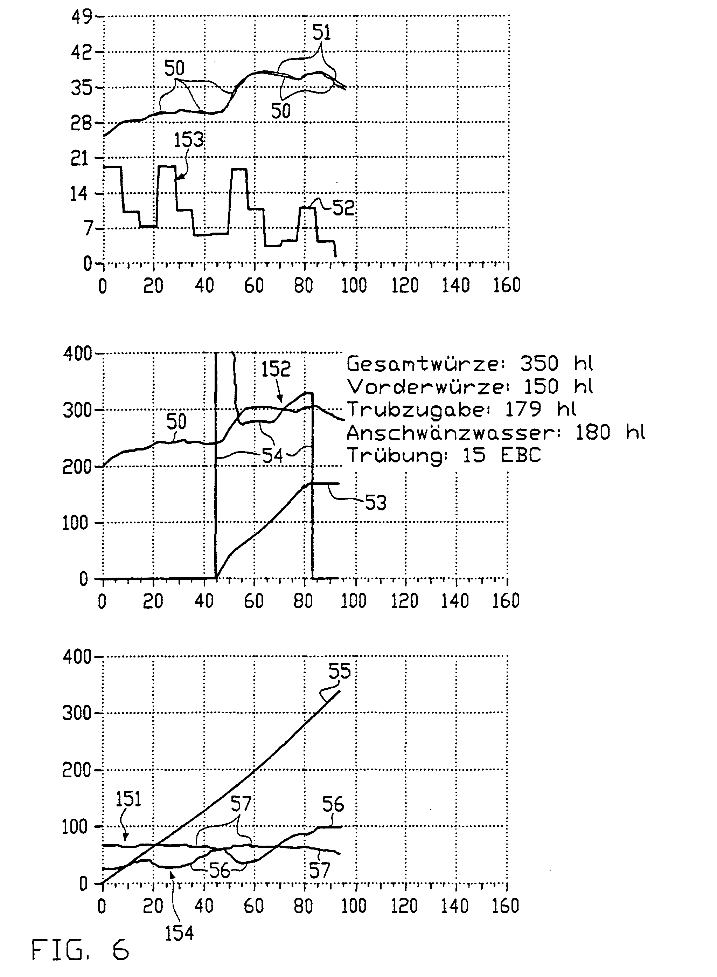

Darüber hinaus wird besonders bei geringem Wasserpuffer das Niveau der Würze 20 in einem Läutergefäß geringfügig abgesenkt, um durch eine größere Druckdifferenz zwischen Läuterbottich und Läutergefäß den Istwürzefluss zu erhöhen. Insbesondere zum Ende der Vorderwürze hin wird das Niveau im Läutergefäß 19 abgesenkt, um eine ausreichende Druckdifferenz zwischen Läuterbottich 1 und Läutergefäß 19 und damit einen akzeptablen Istwürzefluss aufrecht zu erhalten. Dabei wird ein plötzlicher Sog auf die Treberschicht durch ein allmähliches Absenken des Niveaus im Läutergefäß 19 vermieden. Dies wird in Fig. 6 insbesondere bei 151 dargestellt. Während eines Nachgusses, der auf die Vorderwürze folgt, wird das Niveau in dem Läutergefäß 19 erst dann vollständig angehoben, wenn das zugeführte Anschwänzwasser einen ausreichend dicken Wasserpuffer auf der Treberschicht bildet, so dass die Druckdifferenz zwischen Läuterbottich 1 und Läutergefäß 19 ausreicht, den Istwürzefluss in etwa auf den Sollwürzefluss anzuheben. Dies ist in Fig. 5 bei 142 dargestellt.

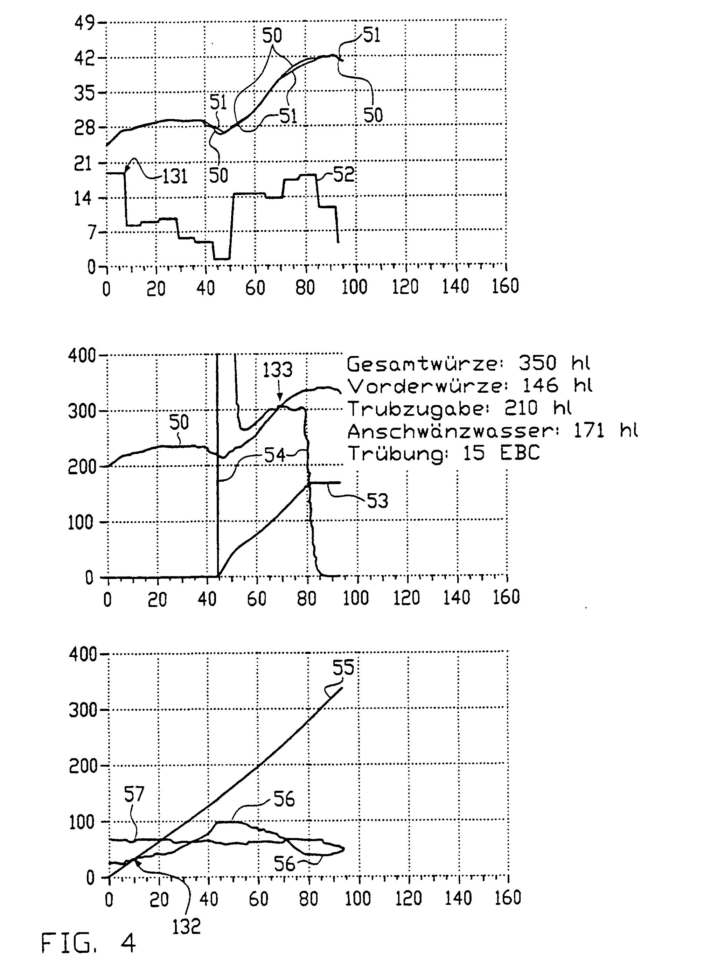

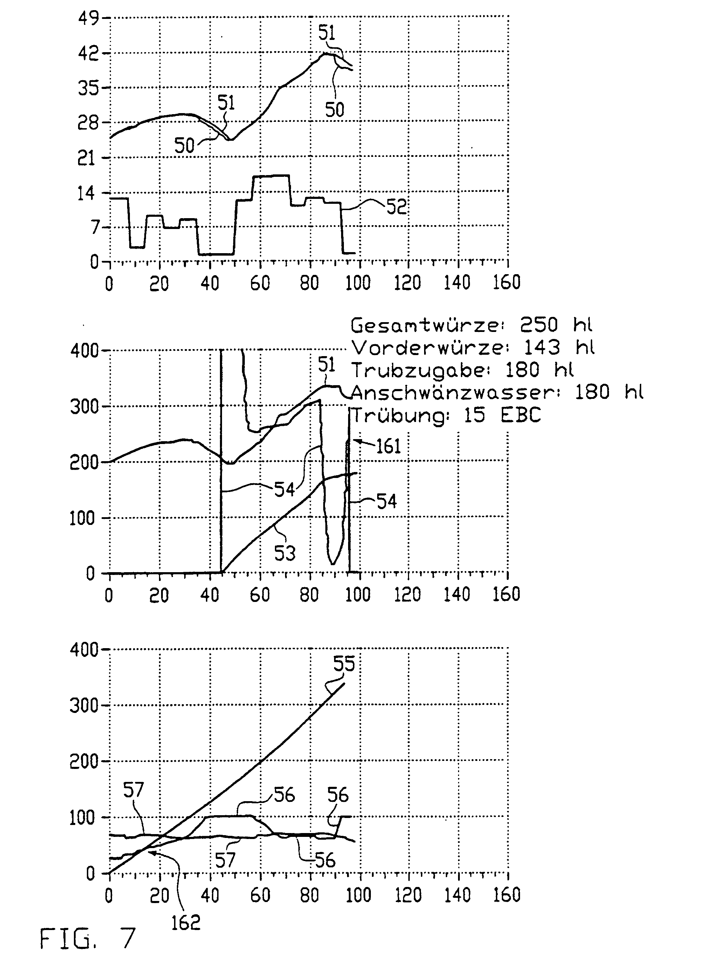

Vorzugsweise wird bei gutlaufenden Suden die sich aus obigen Formeln ergebende Anschwänzwassermenge in einem bestimmten Rahmen reduziert, um die spätere Abtropfzeit zu reduzieren. In Fig. 2 beträgt die Anschwänzwassermenge 172 hl und der Anschwänzwasserfluss liegt während des gesamten Nachgusses unter dem Istwürzefluss. In Fig. 4 beträgt die Anschwänzwassermenge 171 hl. Hier nimmt der Treberwiderstand erst zum Ende des Nachgusses ab. Die Abnahme ist so stark, dass weniger Anschwänzwasser ausreicht. Den umgekehrten Fall zeigt Fig.3. Da der Treberwiderstand am Anfang und in der Mitte des Nachgusses gering war, der Sud also gut anlief, sollte die Anschwänzwassermenge reduziert werden. Da der Sud aber zum Ende des Nachgusses hin einen hohen Treberwiderstand aufwies, wurde nochmals angeschwänzt (124). Die Anschwänzwassermenge beträgt hier 179 hl. Einen ähnlichen Ablautervorgang mit nochmaligem Anschwänzen bei 161 zeigt Fig. 7. Hier betrug die Anschwanzwassermenge 180 hl.

Vorzugsweise wird ein Tiefschnitt bei der Erfindung nicht allein dadurch ausgelöst, dass der Istwürzefluss einen bestimmten Grenzwert unterschreitet. Vielmehr werden vorzugsweise die Abweichung des Istwurzeflusses vom Sollwürzefluss, die Stellung des Regelventils 16. die relative Hohe des Istwürzeflusses, die Höhe der Aufhackmaschine und die Trübung berucksichtigt. Die Stellen, an denen Tiefschnitte ausgelöst werden, sind nicht in den Figuren 2 bis 9 dargestellt.

Vorzugsweise ist bei der vorliegenden Erfindung auch die Menge der Vorderwürze in einem gewissen Rahmen vanabel Wenn z.B. schon eine Aufhacksperre aktiv ist, die einen Tiefschnitt verhindert. und nur noch wenige Hektoliter abzuläutem sind und der Istwürzefluss unerwünscht genng wird, wird die Vorderwürze vorzeitig abgebrochen. Fig. 2 zeigt einen Ablautervorgang. bei dem die Vorderwürze gut läuft und deshalb die gesamte Vorderwürze von beispielsweise 150 hl abgeläutert wird. Fig. 3 zeigt einen Abläutervorgang mit zum Schluss etwas zäh laufender Vorderwürze, so dass die Menge der Vorderwürze leicht auf beispielsweise 147 hl reduziert wird. Fig. 7 zeigt einen Abläutervorgang mit zum Schluss schlecht laufender Vorderwürze, bei dem die Menge der Vorderwürze weiter auf beispielsweise 143 hl reduziert wird.

Vorzugsweise wird auch bei gutlaufenden Suden zur besseren Auswaschung der Treberschicht während des Nachgusses einmal in tiefer Stellung aufgehackt (Fig. 2, 111), falls die Aufhackmaschine während der Vorderwürze eine bestimmte Höhe nicht unterschritten hat.

Der Zeitpunkt der Trubzugabe wird vorzugsweise in Abhängigkeit vom Treberwiderstand festgelegt. Wenn der Treberwiderstand am Anfang des Nachgusses hoch ist, erfolgt die Trubzugabe später. Fig. 2 zeigt einen Abläutervorgang, wobei der Treberwiderstand zu Anfang des Nachgusses gering ist und deshalb die Trubzugabe bereits erfolgt, nachdem 179 hl Läuterwürze abgeläutert wurden. Fig. 5 zeigt einen Abläutervorgang, bei dem der Treberwiderstand am Anfang des Nachgusses hoch ist, also der Nachguss schlecht anläuft, und deshalb die Trubzugabe erst erfolgt, nachdem 210 hl Läuterwürze abgeläutert wurden.

Vorzugsweise wird femer der Istwürzefluss in Abhängigkeit von der zeitlichen Änderung des Regelventils 16 sowie der Höhe der Aufhackmaschinen gewählt. Der Sollwürzefluss wird insbesondere nicht angehoben, während die Aufhackmaschine noch in tiefer Position fährt, um eine zu starke Trübung der Läuterwürze zu vermeiden. In Fig. 7 bei 162 wird der Sollwürzefluss nicht angehoben, obwohl Istwürzefluss und Sollwürzefluss gleich sind, weil die Aufhackmaschine noch in tiefer Position fährt und das Regelventil 16 gerade schnell öffnet.

Falls der Istwürzefluss hinter dem Sollwürzefluss zurückbleibt, wird in einer anderen bevorzugten Ausführungsform der Druckunterschied zwischen Läuterbottich 1 und Läutergefäß 19 durch das Einspeisen von CO₂ in den Läuterbottich erhöht. Bezüglich des Istflusses wirkt ein Einspeisen von CO₂ ähnlich einem dickeren Wasserpuffer durch einen erhöhten Zufluss von Anschwänzwasser oder einem Absenken des Niveaus in dem Läutergefäß 19. Beim Einspeisen von CO₂ in den Läuterbottich wird die Ausgleichsleitung vorzugsweise geschlossen, um einen Druckausgleich mit dem Läutergefäß 19 zu verhindern.

Der erfindungsgemäße Regler und das erfindungsgemäße Verfahren verwendet vorzugsweise neun Eingangsgrößen, nämlich die Differenz zwischen Sollwürzefluss und Istwürzefluss, den Istwürzefluss, die zeitliche Änderung der Stellung des Regelventils, die Stellung des Regelventils, die abgeläuterte Menge, die Trübung der Läuterwürze, die Anschwänzwassermenge, die Höhe der Aufhackmaschine sowie eine bool'sche Variable, die angibt, ob die Aufhackmaschine während der Vorderwürze einmal in tiefe Stellung gefahren wurde. Der erfindungsgemäße Regler und das erfindungsgemäße Verfahren erzeugen acht Ausgangswerte, nämlich den Zufluss von Anschwänzwasser (hl/h), den Sollwürzefluss, die Höhe der Aufhackmaschine, die Feineinstellung der Höhe der Aufhackmaschine, das Niveau in dem Läutergefäß, einen Auslöser für das Ende der Vorderwürze, einen Auslöser für die Trubzugabe und einen Auslöser für einen Tiefschnitt.

Das erfindungsgemäße Verfahren wird vorzugsweise mittels eines Fuzzy-Reglers implementiert, der nach dem Max-Prod-Interferenzmechanismus arbeitet und bei der Defuzzifizierung die Methode des nächsten Schwerpunktes anwendet. Darüber hinaus wird ein alter Wert beibehalten, falls keine Regel aktiv ist.

Da bei dem erfindungsgemäßen Verfahren Ausgänge auf Eingänge zurückgekoppelt sind, werden am Anfang des Abläutervorgangs beispielsweise für zwei Minuten die Ausgangsgrößen des Reglers konstant gehalten, um wilde Einschwingvorgänge zu Beginn des Abläutems zu unterbinden. In anderen bevorzugten Ausführungsformen beginnen verschiedene Ausgänge des Reglers nach verschiedenen Zeiten, die konstanten Werte gemäß des Regelverfahrens zu verändem. Beispielsweise wird nach einer Minute nach Beginn des Abläutems begonnen, den Istwürzefluss auf den Sollwürzefluss mittels des Regelventils 16 zu regeln, wogegen die Höhe der Aufhackmaschine erst nach weiteren vier Minuten verändert wird. Nach weiteren fünf Minuten wird dann das Niveau im Läutergefäß 19 in die Regelung mit einbezogen.

## Patentansprüche

1. Verfahren zur Steuerung des Würzabflusses (15) aus einem Läuterbottich (1), das die folgenden Vorgänge umfasst:
Regeln eines Regelventils, (18) und einer Höhe einer Aufhackmaschine (5) abhängig von einem Unterschied zwischen einem Sollwürzefluss und einem Istwürzefluss, wobei das Regelventil (16) weiter geöffnet oder die Aufhackmaschine (5) weiter abgesenkt wird, falls der Sollwürzefluss unter dem Istwürzefluss liegt und umgekehrt;
Reduzieren des Sollwürzeflusses, falls weder durch weiteres Öffnen des Regelventils (16) noch durch Absenken der Aufhackmaschine (5) eine weitere Erhöhung des Istwürzeflusses erwünscht ist;
**dadurch gekennzeichnet, dass**
der Sollwürzefluss und die Höhe der Aufhackmaschine (5) ferner in Abhängigkeit der Trübung der abfließenden Würze eingestellt wird, so dass eine Erhöhung der Trübung zu einem weniger starken Absenken der Aufhackmaschine und zu einem geringeren Sollwürzefluss führt.

2. Verfahren nach Anspruch 1, **dadurch gekennzeichnet, dass** als Eingangsgröße ferner die zeitliche Änderung der Stellung des Regelventils (16) berücksichtigt wird und eine schnelle Öffnung des Regelventils (16) zu einer Absenkung des Sollwürzeflusses und einem Absenken der Aufhackmaschine führt.

3. Verfahren nach Anspruch 1 oder 2, **dadurch gekennzeichnet, dass** der Zufluss von Anschwänzwasser über den Istwürzefluss angehoben wird, wenn während eines Nachgusses der Istwürzefluss unter dem Sollwürzefluss bleibt, und der Zufluss des Anschwänzwassers reduziert wird, sobald sich der Istwürzefluss dem Sollwürzefluss annähert.

4. Verfahren nach einem der Ansprüche 1 bis 3, **dadurch gekennzeichnet, dass** ferner ein Niveau in einem Läutergefäß (19) abgesenkt wird, wenn der Istwürzefluss unter dem Sollwürzefluss bleibt, insbesondere dann, wenn das Ende des Abläutems einer Vorderwürze unmittelbar bevorsteht.

5. Verfahren nach einem der Ansprüche 1 bis 4, **dadurch gekennzeichnet, dass** bei gut laufenden Suden die Anschwänzwassermenge reduziert wird.

6. Verfahren nach einem der Ansprüche 1 bis 5, **dadurch gekennzeichnet, dass** zum Auflösen eines Tiefschnitts die Stellung des Regelventils (16), der Istwürzefluss (15), die Höhe der Aufhackmaschine (5) und die Trübung berücksichtigt werden.

7. Verfahren nach einem der Ansprüche 1 bis 6, **dadurch gekennzeichnet, dass** die Aufhackmaschine (5) während des Nachgusses mindestens einmal in die tiefe Stellung gefahren wird, wenn die Aufhackmaschine während der Vorderwürze eine bestimmte Höhe nicht unterschritten hat.

8. Verfahren nach einem der Ansprüche 1 bis 7, **dadurch gekennzeichnet, dass** eine abgeläuterte Menge der Vorderwürze reduziert wird, falls ein Sud während des Abläutems der Vorderwürze schlecht läuft.

9. Verfahren nach einem der Ansprüche 1 bis 8, **dadurch gekennzeichnet, dass** eine Trubzugabe um so später während eines Nachgusses erfolgt, je schlechter der Nachguss läuft.

## Claims

1. Method of controlling the wort outflow (15) from a lauter tun (1), the method comprising the following operations:
regulating a regulating valve (18) and the height of a raking machine (5) in dependence on a difference between a desired wort flow and an actual wort flow, the regulating valve (16) opening further, or the raking machine (5) being lowered further, if the desired wort flow is below the actual wort flow and vice versa;
reducing the desired wort flow if a further increase in the actual wort flow is not desirable either by opening the regulating valve (16) further or by lowering the raking machine (5),
**characterized in that**
the desired wort flow and the height of the raking machine (5), furthermore, are adjusted in dependence on the turbidity of the outflowing wort, with the result that an increase in the turbidity results in less pronounced lowering of the raking machine and in a lesser desired wort flow.

2. Method according to Claim 1, **characterized in that** the temporal change in the position of the regulating valve (16), furthermore, is taken into account as the input variable, and quick opening of the regulating valve (16) results in a decrease in the desired wort flow and in lowering of the raking machine.

3. Method according to Claim 1 or 2, **characterized in that** there is an increase in the inflow of sparge water via the actual wort flow if, during the course of a second wort, the actual wort flow remains below the desired wort flow, and the inflow of the sparge water is reduced as soon as the actual wort flow approaches the desired wort flow.

4. Method according to one of Claims 1 to 3, **characterized in that**, furthermore, the level in a lauter vessel (19) is lowered if the actual wort flow remains below the desired wort flow, in particular when the end of the operation of clarifying a first wort is imminent.

5. Method according to one of Claims 1 to 4, **characterized in that** the quantity of sparge water is reduced when brewing is proceeding well.

6. Method according to one of Claims 1 to 5, **characterized in that**, in order to initiate deep cutting, account is taken of the position of the regulating valve (16), the actual wort flow (15), the height of the raking machine (5) and the turbidity.

7. Method according to one of Claims 1 to 6, **characterized in that** the raking machine (5) is moved into the low-level position at least once during the course of the second wort if the raking machine has not dropped below a certain height during the course of the first wort.

8. Method according to one of Claims 1 to 7, **characterized in that** a lautered quantity of the first wort is reduced if brewing is proceeding poorly during the operation of lautering the first wort.

9. Method according to one of Claims 1 to 8, **characterized in that** the more poorly the second wort proceeds, the later is the point in time during the course of the second wort at which trub is added.

## Revendications

1. Procédé de commande de l'écoulement de moût (15) hors d'une cuve de clarification (1), qui comprend les étapes suivantes :
régulation d'une vanne de régulation (18) et d'une hauteur d'une machine d'aération des drêches (5) en fonction d'une différence entre un débit de moût de consigne et un débit de moût réel, la vanne de régulation (16) étant ouverte davantage ou la machine d'aération des drêches (5) abaissée davantage dans le cas où le débit de moût de consigne est inférieur au débit de moût réel et inversement ;
réduction du débit de moût de consigne dans le cas où une nouvelle élévation du débit de moût réel n'est souhaitée ni en ouvrant davantage la vanne de régulation (16) ni en abaissant davantage la machine d'aération des drêches (5) ;
**caractérisé en ce que**
le débit de moût de consigne et la hauteur de la machine d'aération des drêches (5) sont par ailleurs réglés en fonction de la turbidité du moût qui s'écoule, de telle sorte qu'une élévation de la turbidité conduit à un abaissement moins poussé de la machine d'aération des drêches (5) et à un plus faible débit de moût de consigne.

2. Procédé selon la revendication 1, **caractérisé en ce que** comme grandeur d'entrée est par ailleurs prise en compte la modification dans la temps du réglage de la vanne de régulation (16) et une ouverture rapide de la vanne de régulation (16) conduit à un abaissement du débit de moût de consigne et à un abaissement de la machine d'aération des drêches.

3. Procédé selon la revendication 1 ou 2, **caractérisé en ce que** l'apport d'eau de lavage est élevé au-dessus du débit de moût réel lorsque pendant un jus de lavage le débit de moût réel demeure en deçà du débit de moût de consigne, et l'apport de l'eau de lavage est réduit dès que le débit de moût réel s'approche du débit de moût de consigne.

4. Procédé selon l'une des revendications 1 à 3, **caractérisé en ce que** par ailleurs un niveau est abaissé dans un bac de clarification (19) lorsque le débit de moût réel demeure en deçà du débit de moût de consigne, en particulier lorsque la fin de la clarification d'un premier moût est imminente.

5. Procédé selon l'une des revendications 1 à 4, **caractérisé en ce que** la quantité d'eau de lavage est réduite lorsque le brassin s'écoule bien.

6. Procédé selon l'une des revendications 1 à 5, **caractérisé en ce que** la position de la vanne de régulation (16), le débit de moût réel (15), la hauteur de la machine d'aération des drêches (5) et la turbidité sont pris en compte pour déclencher une aération en profondeur.

7. Procédé selon l'une des revendications 1 à 6, **caractérisé en ce que** pendant le jus de lavage la machine d'aération des drêches (5) est descendue au moins une fois dans la position basse, lorsque la machine d'aération des drêches pendant le premier moût n'est pas descendue en dessous d'une certaine hauteur.

8. Procédé selon l'une des revendications 1 à 7, **caractérisé en ce qu'**une quantité clarifiée du premier moût est réduite dans le cas où un brassin s'écoule mal pendant la clarification du premier moût.

9. Procédé selon l'une des revendications 1 à 8, **caractérisé en ce qu'**un apport de dépôt s'opère d'autant plus tard, pendant un jus de lavage, que le jus de lavage s'écoule plus mal.
